# EUROPÄISCHE PATENTSCHRIFT

(11) **EP 4 209 311 B1**
(45) Veröffentlichungstag und Bekanntmachung des Hinweises auf die Patenterteilung: **13.11.2024**
(21) Anmeldenummer: 22176858.3
(22) Anmeldetag: 01.06.2022
(51) Int. Cl.: B25J 9/00

(54) **ANZIEHBARE HILFSVORRICHTUNG MIT VERSTELLBARER OBERER KÖRPERANBINDUNG**
RETRACTABLE AUXILIARY DEVICE WITH ADJUSTABLE UPPER BODY ATTACHMENT
DISPOSITIF D'AIDE AMOVIBLE À RACCORDEMENT RÉGLABLE DU CORPS SUPÉRIEUR

(30) Priorität: 05.01.2022 DE 102022100206
(43) Veröffentlichungstag der Anmeldung: 12.07.2023
(73) Patentinhaber: J. Schmalz GmbH, 72293 Glatten (DE)
(72) Erfinder: Eberhardt, Oliver, 72250 Freudenstadt (DE); Harbauer-Rieß, Christina, 80802 München (DE)
(74) Vertreter: DREISS Patentanwälte PartG mbB

(56) Entgegenhaltungen:
- EP-A1- 2 754 538
- EP-A1- 3 246 285
- WO-A1-2016/187275
- WO-A1-2018/157302
- DE-A1- 102017 112 436
- JP-A- 2015 182 831

## Beschreibung

Die Erfindung betrifft eine anziehbare Hilfsvorrichtung zur Unterstützung beim Anheben und/oder Halten von Lasten durch eine Bedienperson.

Hilfsvorrichtungen können dazu dienen, die Belastungen, welche beim Anheben von Gegenständen auf den Nutzer wirken, entweder direkt in den Boden zu übertragen oder zumindest nur durch ausgewählte Körperbereiche, z.B. einen Hüftbereich einer Bedienperson, zu leiten und so das Gelenk- und Muskelsystem des Nutzers zu entlasten.

Es ist bekannt, Hilfsvorrichtungen als stationäre oder teilmobile Vorrichtungen auszubilden, welche z.B. an einem Arbeitsplatz eines Nutzers installiert sind. Beispielsweise sind stationäre Hebehilfen wie Schlauchheber, Seilbalancer oder Manipulatoren im Stand der Technik beschrieben, mittels welchen Stückgüter aufgenommen und von einer Position zu einer anderen verlagert werden können. Solche Hilfsvorrichtungen sind jedoch in ihrer Flexibilität begrenzt, da sie nicht ohne weiteres an einen neuen Ort verbracht und dort einsatzbereit gemacht werden können.

Es sind auch Hilfsvorrichtungen bekannt, welche als vollständig mobile, vom Nutzer anziehbare Vorrichtungen ausgebildet sind. Solche mobilen Hilfsvorrichtungen weisen üblicherweise eine oder mehrere Körperanbindungen auf, über welche die Hilfsvorrichtung an den Körper einer Bedienperson ankoppelbar ist und über welche Kräfte zwischen Hilfsvorrichtung und Körper übertragen werden können.

Beispielsweise sind sog. Exoskelette bekannt, welche als Hebehilfe zum Anheben von Lasten eingesetzt werden können. Hierbei sind Auslegungen bekannt, bei welchen das Exoskelett im Wesentlichen die gesamte kinematische Kette für den Hebevorgang nachbildet, d.h. die lastragenden Gliedmaßen und Bewegungsfreiheitsgrade des Trägers ("Gelenke" des Exoskeletts) werden vom Exoskelett möglichst genau nachgebildet. Solche Lösungen sind auch als anthropomorphe Exoskelette bekannt. Derartige Exoskelette haben jedoch den Nachteil, dass aus Komplexitätsgründen in der Regel nicht alle Freiheitsgrade des menschlichen Körpers abgebildet werden, wodurch sich Bewegungseinschränkungen und somit ein reduzierter Bedienkomfort ergeben. Zudem sind solche Exoskelette oftmals schwer und daher unhandlich.

Aus der WO 2014/195373 A1 und der WO 2018/157302 A1 sind zudem nichtanthropomorphe Hebehilfen bekannt, welche zueinander bewegliche Stützelemente sowie mehrere, mit den Stützelementen starr verbundene Körperanbindungspunkte aufweisen.

Die bekannten Hilfsvorrichtungen sind in der Regel nur bedingt an die spezifischen anatomischen Gegebenheiten eines Nutzers anpassbar, was sich negativ auf eine Kraftübertragung zwischen Körper und Hilfsvorrichtung auswirken kann. Zudem ist bei den bekannten Hilfsvorrichtungen eine Bewegungsfreiheit für die Bedienperson und somit ein Tragekomfort für den Nutzer regelmäßig eingeschränkt.

Die Erfindung beschäftigt sich mit der Aufgabe, eine Hilfsvorrichtung bereitzustellen, welche einen Nutzer beim Handhaben eines Gegenstands effektiv entlastet und an die anatomischen Gegebenheiten des Nutzers flexibel anpassbar ist. Außerdem soll die Hilfsvorrichtung eine hohe Bewegungsfreiheit für den Nutzer ermöglichen.

Diese Aufgabe wird durch eine Hilfsvorrichtung mit den Merkmalen des Anspruchs 1 gelöst. Die Hilfsvorrichtung ist als anziehbare Hilfsvorrichtung zur Unterstützung beim Anheben und/oder Halten von Lasten durch eine Bedienperson ausgebildet, im Sinne einer von einer Person am Körper tragbaren Vorrichtung zur Unterstützung beim Anheben und/oder Halten von Gegenständen ("körpergetragene Hebehilfe"). Mit anderen Worten ist die Hilfsvorrichtung also insbesondere derart ausgebildet, dass sie von einer Person angezogen werden kann und die Person sich mit der angezogenen Hilfsvorrichtung an einen anderen Ort bewegen kann. Insbesondere kann die Vorrichtung derart ausgebildet sein, dass sie von der Bedienperson rucksackartig anziehbar ist.

Die Hilfsvorrichtung umfasst eine Stützstruktur, welche dazu ausgebildet ist, eine Gewichtskraft und/oder Trägheitskraft einer Last aufzunehmen und diese Kraft in bestimmte Körperbereiche der Bedienperson umzuleiten.

Die Stützstruktur umfasst eine erste (rechte) Stütze und eine von der ersten Stütze separate zweite (linke) Stütze. Die erste und die zweite Stütze weisen jeweils einen Rückenabschnitt und einen Auslegerabschnitt auf. Die Stützen sind derart ausgebildet, dass dann, wenn die Hilfsvorrichtung von der Bedienperson angezogen ist, der Rückenabschnitt posterior, also dorsal bzw. "an der Rückseite" des Körpers, angeordnet ist und sich im Wesentlichen beginnend von der Hüfte cranial entlang der Rückenpartie der Bedienperson erstreckt oder sich beginnend von der Hüfte cranial entlang der Rückenpartie der Bedienperson erstreckt. Dies meint nicht, dass der Rückenabschnitt exakt parallel zu dem Rücken der Bedienperson verlaufen muss. Der Auslegerabschnitt ist derart ausgebildet, dass er sich bei angezogener Hilfsvorrichtung von posterior nach anterior, also ventral bzw. "von der Rückseite zur Vorderseite des Körpers", erstreckt. Bei aufrecht stehender Bedienperson erstreckt sich der Rückenabschnitt insbesondere im Wesentlichen vertikal und der Auslegerabschnitt zumindest abschnittsweise horizontal. Insofern kann der Rückenabschnitt eine Vertikalstütze bilden und der Auslegerabschnitt kann eine Horizontalstütze bilden.

Der Rückenabschnitt und/oder der Auslegerabschnitt kann gerade entlang seiner Längserstreckung ausgebildet sein oder aber entlang seiner Längserstreckung zumindest abschnittsweise eine Krümmung aufweisen. Der Auslegerabschnitt kann sich insbesondere an den Rückenabschnitt anschließen. Vorzugsweise erstreckt sich der jeweilige Auslegerabschnitt bei angezogener Hilfsvorrichtung über eine Schulter der Bedienperson. Der Rückenabschnitt und der Auslegerabschnitt können einstückig oder voneinander separat ausgebildet sein. Insbesondere kann der Rückenabschnitt mit dem Auslegerabschnitt beweglich verbunden sein, beispielsweise schwenkbeweglich um eine erste und/oder zweite Auslegerschwenkachse (s.u.). Der Rückenabschnitt und der Auslegerabschnitt sind insbesondere in sich formstabil ausgebildet. Beispielsweise ist es denkbar, dass die Stützen aus Rohrabschnitten und/oder abgelängten Profilteilen gebildet sind. Um die Hilfsvorrichtung an verschiedene Körpergrößen, insbesondere Rückenlängen, anpassen zu können, kann es außerdem vorteilhaft sein, wenn der Rückenabschnitt einer jeweiligen Stütze selbst längenveränderbar ausgebildet sind. Zudem ist es denkbar, dass der Auslegerabschnitt längenveränderbar ausgebildet ist.

Die Hilfsvorrichtung umfasst außerdem eine obere Körperanbindung, insbesondere Oberkörperanbindung, zur Ankopplung der Stützstruktur an einen Oberkörper der Bedienperson. Insbesondere kann die obere Körperanbindung dazu ausgebildet sein, die Stützstruktur an einen Rücken-, Schulter-, und/oder Brustbereich der Bedienperson anzukoppeln.

Die Hilfsvorrichtung umfasst außerdem eine untere Körperanbindung, insbesondere Hüftanbindung, zur Ankopplung der Stützstruktur an einen Becken-, Hüft-, und/oder Lendenbereich der Bedienperson. Die untere Körperanbindung ist insbesondere nicht dazu ausgebildet, die Stützstruktur an untere Extremitäten der Bedienperson, wie z.B. an einen Oberschenkel, Knie oder Unterschenkel, anzukoppeln.

Die obere Körperanbindung und die untere Körperanbindung sind insofern insbesondere derart ausgebildet, dass über sie Kräfte zwischen Körper und Stützstruktur übertragbar sind. Insbesondere kann die obere Körperanbindung dazu ausgebildet sein, solche Kräfte in den Körper einzuleiten, die aus dem Eigengewicht der Stützstruktur, den zum statischen Gleichgewicht erforderlichen Stützreaktionen und den Führungskräften der Stützenabschnitte resultieren. Die untere Körperanbindung kann insbesondere dazu ausgebildet sein, die sich aus der Handhabung einer Last ergebenden Kräfte und Momente in den Körper einzuleiten. Insbesondere sind die obere und/oder die untere Körperanbindung dazu ausgebildet, die Stützstruktur an einem Körperbereich der Bedienperson festzulegen und somit die Hilfsvorrichtung an dem Körper der Bedienperson zu halten. Insofern sind die obere und/oder die untere Körperanbindung insbesondere derart ausgebildet, dass durch Ankoppeln der Stützstruktur an den Körper mittels der oberen bzw. unteren Körperanbindung die Hilfsvorrichtung von der Bedienperson "angezogen" werden kann. Die obere und/oder die untere Körperanbindung können mit der Stützstruktur lösbar verbunden sein, insbesondere wiederholbar verbindbar und wieder trennbar sein. Vorzugsweise sind die obere Körperanbindung und die untere Körperanbindung voneinander beabstandet angeordnet und, insbesondere ausschließlich, über die Stützstruktur miteinander kraftgekoppelt. Dies hat den Vorteil, dass keine oder nur ein geringer Anteil der unmittelbar aus einer gehaltenen Last resultierenden vertikalen Kräfte in den Oberkörper des Nutzers eingeleitet werden.

Die Hilfsvorrichtung umfasst außerdem eine erste (rechte) Handanbindung zur Anbindung an einen rechten Hand- oder Unterarmbereich der Bedienperson, beispielsweise an ein Handgelenk und/oder eine Handwurzel der Bedienperson. Die erste Handanbindung ist mit der ersten Stütze, insbesondere einem freien Ende des Auslegerabschnitts der ersten Stütze, über eine erste längenveränderbare Verbindungseinrichtung verbunden.

Die Hilfsvorrichtung umfasst außerdem eine zweite (linke) Handanbindung zur Anbindung an einen linken Hand- oder Unterarmbereich der Bedienperson, beispielsweise ein Handgelenk und/oder eine Handwurzel der Bedienperson. Die zweite Handanbindung ist mit der zweiten Stütze, insbesondere einem freien Ende des Auslegerabschnitts der zweiten Stütze, über eine zweite längenveränderbare Verbindungseinrichtung verbunden.

Die Handanbindungen dienen insofern als Bindeglied zwischen der menschlichen Hand und der Hilfsvorrichtung. Über die Handanbindungen und die Verbindungseinrichtungen können Gewichts- und Trägheitskräfte der gehaltenen Last in die Stützstruktur eingeleitet werden und dann über die Körperanbindungen in ausgewählte Körperbereiche der Bedienperson eingeleitet werden. Bei der vorgeschlagenen Hilfsvorrichtung beginnt die Unterstützung insofern insbesondere bereits ab dem Handgelenk der Bedienperson. Vorzugsweise sind die Handanbindungen derart ausgebildet, dass zum Greifen des zu hebenden Gegenstands die menschliche Hand selbst verwendet wird, welche in Ihrer Vielseitigkeit technischen Greifsysteme überlegen ist. Zu diesem Zweck können die Handanbindungen in verschiedener Weise ausgestaltet sein. Denkbar ist beispielsweise eine Ausgestaltung als Manschette, welche die Handwurzel und ggf. auch das Handgelenk der Hand umfängt.

Die längenveränderbaren Verbindungseinrichtungen können insbesondere als Seilzug ausgebildet sein. Insofern kann die erste Handanbindung über einen ersten Seilzug mit der ersten Stütze verbunden sein und die zweite Handanbindung kann über einen zweiten Seilzug mit der zweiten Stütze verbunden sein. Insbesondere kann eine gemeinsame oder jeweilige Antriebseinrichtung zum Antreiben der Seilzüge vorgesehen sein. Auf diese Weise kann eine aktive Unterstützung der Bedienperson, z.B. bei einem Hebevorgang oder bei einem statischen Halten einer Last, erzielt werden. Die wenigstens eine Antriebseinrichtung kann insbesondere an der Stützstruktur gehaltert sein. Insbesondere können die Seile der Seilzüge jeweils über eine, vorzugsweise innerhalb der jeweiligen Stütze verlaufende, Seilführung geführt sein und über eine Seilumlenkeinrichtung aus der Stütze, insbesondere dem Auslegerabschnitt, austreten.

Bei der vorgeschlagenen Hilfsvorrichtung ist die erste Stütze, insbesondere der Rückenabschnitt der ersten Stütze, an einer ersten oberen Verbindungsstelle mit der oberen Körperanbindung verbunden und die zweite Stütze, insbesondere der Rückenabschnitt der zweiten Stütze, ist an einer zweiten oberen Verbindungsstelle mit der oberen Körperanbindung verbunden. Die obere Körperanbindung ist zudem derart ausgebildet, dass eine Relativposition von erster oberer Verbindungsstelle und zweiter oberer Verbindungsstelle veränderbar, insbesondere einstellbar, ist.

Eine solche Ausgestaltung ermöglicht es, die Hilfsvorrichtung an eine Rückenform der Bedienperson flexibel anzupassen und somit eine effiziente Einleitung von Kräften in den Oberkörper der Bedienperson zu erzielen. Zudem ist ein Tragekomfort bei einer solchen Hilfsvorrichtung erhöht, sodass die Bedienperson eine Arbeitstätigkeit auch bei angezogener Hilfsvorrichtung möglichst ungestört verrichten kann. Insbesondere umfasst die obere Körperanbindung wenigstens einen Verstellmechanismus, welcher dazu ausgebildet ist, eine Relativposition der ersten oberen Verbindungsstelle und der zweiten oberen Verbindungsstelle zu verändern.

In vorteilhafter Weise kann die obere Körperanbindung derart ausgebildet sein, dass ein Abstand der ersten oberen Verbindungsstelle von der zweiten oberen Verbindungsstelle veränderbar, insbesondere einstellbar, ist. Insbesondere kann die obere Körperanbindung derart ausgebildet sein, dass eine Position der ersten oberen Verbindungsstelle und/oder der zweiten oberen Verbindungsstelle dann, wenn die Hilfsvorrichtung von der Bedienperson angezogen ist, lateral und/oder medial relativ zur Medianebene, also insbesondere orthogonal zur Medianebene, veränderbar ist. Unter der Medianebene wird im vorliegenden Zusammenhang - wie in der Anatomie üblich - eine, insbesondere lotrechte, Körperebene bezeichnet, welche sich von der vorderen Körperwand zu der hinteren Körperwand erstreckt und den Körper symmetrisch in eine rechte und eine linke Hälfte teilt. Eine solche Ausgestaltung ermöglicht es, die obere Körperanbindung an eine gegebene Rückenbreite der Bedienperson anzupassen und somit eine für die Bedienperson optimale Passform der Hilfsvorrichtung einzustellen.

Die obere Körperanbindung kann außerdem derart ausgebildet sein, dass dann, wenn die Hilfsvorrichtung von der Bedienperson angezogen ist, eine Position der ersten oberen Verbindungsstelle und/oder der zweiten oberen Verbindungsstelle in Richtung anterior (ventral) und/oder in Richtung posterior (dorsal) relativ zur Frontalebene veränderbar, insbesondere einstellbar, ist. Dies ermöglicht es, einen Abstand der Stützen zu dem Rücken der Bedienperson einzustellen.

Im Rahmen einer vorteilhaften Ausgestaltung kann die obere Körperanbindung einen ersten oberen Verstellmechanismus aufweisen, welcher dazu ausgebildet ist, eine Position der ersten und/oder der zweiten oberen Verbindungsstelle bei angezogener Hilfsvorrichtung lateral und/oder medial relativ zur Medianebene zu verändern und somit einen Abstand der Stützen voneinander einzustellen. Um eine Position von erster und zweiter oberer Verbindungsstelle voneinander unabhängig einstellen zu können, kann es vorteilhaft sein, wenn der ersten und der zweiten Stütze jeweils ein erster oberer Verstellmechanismus zugeordnet ist, welcher dazu ausgebildet ist, die obere Verbindungsstelle der jeweiligen Stütze bei angezogener Hilfsvorrichtung lateral und medial relativ zur Medianebene zu verlagern. Beispielsweise ist es denkbar, dass die Stützen jeweils an einer Zahnstange gehaltert sind, welche über einen Zahnstangenmechanismus lateral und medial verschiebbar an der oberen Körperanbindung, insbesondere einem Grundkörper der oberen Körperanbindung, gehaltert sind.

Alternativ oder ergänzend kann die obere Körperanbindung einen zweiten oberen Verstellmechanismus aufweisen, welcher dazu ausgebildet ist, eine Position der ersten und/oder der zweiten oberen Verbindungsstelle bei angezogener Hilfsvorrichtung in Richtung anterior und/oder in Richtung posterior relativ zur Frontalebene zu verändern und somit insbesondere einen Abstand der Stützen zu dem Rücken der Bedienperson einzustellen. Besonders vorteilhaft erweist es sich, wenn der ersten und der zweiten Stütze jeweils ein zweiter oberer Verstellmechanismus zugeordnet ist, welcher dazu ausgebildet ist, die obere Verbindungsstelle der jeweiligen Stütze bei angezogener Hilfsvorrichtung in Richtung anterior und in Richtung posterior relativ zur Frontalebene zu verlagern. Insofern kann jeder Stütze ein eigener erster oberer Verstellmechanismus und/oder ein zweiter oberer Verstellmechanismus zugeordnet sein.

Um ein unerwünschtes Verstellen der Hilfsvorrichtung nach erfolgreicher Anpassung an die Anatomie der Bedienperson, bspw. während eines Arbeitsprozesses, zu verhindern, kann es außerdem vorteilhaft sein, wenn die Hilfsvorrichtung eine Feststelleinrichtung zur Feststellung einer Relativposition von erster und zweiter oberer Verbindungsstelle umfasst. Insbesondere können der erste und/oder der zweite Verstellmechanismus feststellbar ausgebildet sein, bspw. über einen entsprechenden Rastmechanismus.

Im Rahmen einer vorteilhaften Weiterbildung können die erste und die zweite Stütze jeweils gelenkig mit der oberen Körperanbindung verbunden sein. Eine solche gelenkige Verbindung der Stützen mit der oberen Körperanbindung ermöglicht eine Relativbewegung von Stützstruktur und oberer Körperanbindung und erhöht somit eine Bewegungsfreiheit der Bedienperson bei angezogener Hilfsvorrichtung. Insbesondere kann die erste Stütze an einer ersten oberen Verbindungsstelle über eine erste obere Gelenkeinrichtung und die zweite Stütze an einer zweiten oberen Verbindungsstelle über eine zweite obere Gelenkeinrichtung mit der oberen Körperanbindung verbunden sein. Besonders vorteilhaft kann es sich erweisen, wenn die erste obere Gelenkeinrichtung und die zweite obere Gelenkeinrichtung jeweils mindestens zwei, vorzugsweise mindestens drei, Gelenkfreiheitsgrade aufweisen, also insbesondere derart ausgebildet sind, dass die Stützen entlang wenigstens dreier Freiheitsgrade relativ zu der oberen Körperanbindung bewegbar sind.

Im Rahmen einer vorteilhaften Ausgestaltung kann die obere Körperanbindung eine obere Kraftverteilereinrichtung umfassen, welche mit den Stützen, insbesondere mit dem Rückenabschnitt der Stützen, verbunden ist. Die obere Körperanbindung kann außerdem eine mit der oberen Kraftverteilereinrichtung verbundene flexible, insbesondere an eine Anatomie der Bedienperson anpassbare, obere Körperanbindungseinrichtung zur Anbindung an einen Oberkörperbereich der Bedienperson umfassen. Die obere Kraftverteilereinrichtung ist insbesondere dazu ausgebildet, Kräfte von den Stützen aufzunehmen und in die obere Körperanbindungseinrichtung umzuleiten, welche die Kräfte dann in den Körper der Bedienperson einleitet.

Die obere Körperanbindungseinrichtung kann insbesondere wenigstens ein Textilteil umfassen, insbesondere daraus bestehen. Das wenigstens eine Textilkeil kann beispielsweise in Form eines Gurtes oder einer Manschette ausgebildet sein. Es ist beispielsweise denkbar, dass die obere Körperanbindungseinrichtung ein Gurtsystem umfasst. Insbesondere kann das Gurtsystem derart ausgebildet sein, dass die Hilfsvorrichtung von der Bedienperson rucksackartig anziehbar ist.

Im Rahmen einer vorteilhaften Ausgestaltung kann die obere Kraftverteilereinrichtung einen oberen Grundkörper aufweisen, an welchem die Stützen, insbesondere über die oberen Gelenkeinrichtungen, angeordnet sind. Vorzugsweise erstreckt sich der obere Grundkörper zwischen der ersten Stütze und der zweiten Stütze, insbesondere zwischen dem Rückenabschnitt der ersten Stütze und dem Rückenabschnitt der zweiten Stütze. Der obere Grundkörper dient insofern als oberes Verbindungsglied zwischen der ersten und der zweiten Stütze. Der obere Grundkörper kann ein- oder mehrteilig ausgebaut aufgebaut sein.

Für eine effektive Krafteinleitung kann es außerdem vorteilhaft sein, wenn die obere Kraftverteilereinrichtung eine Krafteinleitungsplatte zur Unterstützung einer Einleitung von Horizontalkräften in einen Rückenbereich der Bedienperson umfasst. Die Krafteinleitungsplatte ist insbesondere derart an der oberen Körperanbindung angeordnet, dass die Krafteinleitungsplatte bei angezogener Hilfsvorrichtung parallel zu einer Rückenfläche der Bedienperson, insbesondere mittig auf dem Rücken, ausgerichtet ist. Vorzugsweise ist die Krafteinleitungsplatte mit dem oberen Grundkörper derart verbunden, dass ein Abstand der Krafteinleitungsplatte zu dem oberen Grundkörper und somit ein Abstand zwischen Grundkörper und Rücken veränderbar, insbesondere einstellbar, ist. Die Krafteinleitungsplatte ist zudem vorzugsweise derart mit der oberen Körperanbindungseinrichtung, beispielsweise dem vorstehend beschriebenen Gurtsystem, verbunden, dass eine Position der Krafteinleitungsplatte cranial, also in Richtung des Kopfs der Bedienperson, bzw. caudal, also in Richtung des Gesäß der Bedienperson, veränderbar, insbesondere einstellbar, ist. Beispielsweise ist es denkbar, dass die Position der Krafteinleitungsplatte cranial bzw. caudal durch Veränderung einer Länge des vorstehend beschriebenen Gurtsystems veränderbar ist. Eine solche Ausgestaltung ermöglicht es, die Position der Krafteinleitungsplatte an die anatomischen Gegebenheiten der Bedienperson flexibel anzupassen und somit eine effiziente Krafteinleitung in den Körper zu erzielen.

Im Rahmen einer vorteilhaften Ausgestaltung kann der zweite obere Verstellmechanismus drei zueinander verstellbare Segmente umfassen, wobei ein erstes Segment mit der oberen Kraftverteilereinrichtung, insbesondere dem oberen Grundkörper, verbunden ist, und wobei ein zweites Segment mit der jeweiligen Stütze, insbesondere über die obere Gelenkeinrichtung, verbunden ist. Ein drittes Segment ist dann insbesondere zwischen dem ersten und dem zweiten Segment angeordnet und schwenkbeweglich mit dem ersten Segment und schwenkbeweglich mit dem zweiten Segment verbunden. Eine solche Ausgestaltung ermöglich es, einen Abstand der oberen Verbindungsstellen zu dem Rücken auf einfache Weise einzustellen. Vorzugsweise ist der zweite obere Verstellmechanismus derart ausgebildet, dass das erste Segment und das zweite Segment stets zueinander parallel ausgerichtet sind.

Es ist denkbar, dass die Stützstruktur nur über eine Stütze mit der unteren Körperanbindung gekoppelt ist. Für eine effiziente Krafteinleitung erweist es sich jedoch als vorteilhaft, wenn die erste Stütze an einer ersten unteren Verbindungsstelle mit der unteren Körperanbindung verbunden ist und wenn die zweite Stütze an einer zweiten unteren Verbindungsstelle mit der unteren Körperanbindung verbunden ist. Im Rahmen einer vorteilhaften Weiterbildung können die erste Stütze und die zweite Stütze jeweils gelenkig mit der unteren Körperanbindung verbunden sein. Insbesondere kann die erste Stütze an der ersten unteren Verbindungsstelle über eine erste untere Gelenkeinrichtung und die zweite Stütze an der zweiten unteren Verbindungsstelle über eine zweite untere Gelenkeinrichtung mit der unteren Körperanbindung verbunden sein. Eine solche Ausgestaltung erhöht die Bewegungsfreiheit der Bedienperson weiter. Zudem ermöglicht eine gelenkige Verbindung der Stützen mit der unteren Körperanbindung einen Abstand der oberen Verbindungsstellen unabhängig von einem Abstand der unteren Verbindungsstellen einzustellen, insbesondere dann, wenn beide Stützen mit der unteren Körperanbindung verbunden sind.

Besonders vorteilhaft erweist es sich, wenn die erste untere Gelenkeinrichtung und die zweite untere Gelenkeinrichtung jeweils mindestens zwei, insbesondere drei, Gelenkfreiheitsgrade aufweisen. Insbesondere können die erste untere Gelenkeinrichtung und die zweite untere Gelenkeinrichtung jeweils derart ausgebildet sein, dass bei angezogener Hilfsvorrichtung ein Neigungswinkel der Stütze relativ zu der Medianebene und/oder ein Neigungswinkel der Stütze relativ zu der Frontalebene, insbesondere voneinander unabhängig, veränderbar, insbesondere einstellbar, sind. Bei einer solchen Ausgestaltung kann durch die vorstehend beschriebenen Verstellmöglichkeiten der oberen Körperanbindung eine Neigung der Stützen relativ zur Medianebene und zur Frontalebene, insbesondere bei festem Abstand der unteren Verbindungsstellen, erzielt werden. Vorzugsweise können die erste Stütze und die zweite Stütze jeweils über ein Kugelgelenk mit der unteren Körperanbindung verbunden sein.

Für eine effiziente Krafteinleitung in den Körper kann es außerdem vorteilhaft sein, wenn die Hilfsvorrichtung auch im Bereich der unteren Körperanbindung variabel an die Körpermaße einer Bedienperson anpassbar ist. Zu diesem Zweck kann die untere Körperanbindung derart ausgebildet sein, dass eine Relativposition von erster unterer Verbindungsstelle und zweiter unterer Verbindungsstelle, insbesondere von erster unterer Gelenkeinrichtung und zweiter unterer Gelenkeinrichtung, veränderbar, insbesondere einstellbar, ist. In Kombination mit der vorstehend beschriebenen Verstellbarkeit der oberen Körperanbindung können somit verschiedene Anatomien abgebildet werden. Besonders vorteilhaft kann es sein, wenn die untere Körperanbindung derart ausgebildet ist, dass eine Position der ersten unteren Verbindungsstelle und/oder der zweiten unteren Verbindungsstelle dann, wenn die Hilfsvorrichtung von der Bedienperson angezogen ist, lateral und/oder medial relativ zur Medianebene und/oder in Richtung anterior und/oder in Richtung posterior relativ zur Frontalebene veränderbar, insbesondere einstellbar, ist. Dies ermöglicht es, die untere Körperanbindung zum einen an eine Hüftbreite und/oder eine entsprechende Rundung der Hüfte der Bedienperson anzupassen und zum anderen einen Abstand von erster und/oder zweiter unterer Verbindungsstelle zu dem Rücken der Bedienperson einzustellen.

Besonders vorteilhaft kann es sein, wenn die obere und die untere Körperanbindung derart ausgebildet sind, dass eine Relativposition der oberen Verbindungsstellen und eine Relativposition der unteren Verbindungsstellen voneinander unabhängig veränderbar, insbesondere einstellbar, ist. Eine solche Ausgestaltung ermöglicht es, Kombinationen verschiedener Anatomien abzubilden, z.B. breite Schultern in Kombination mit schmalen Hüften. Dies kann insbesondere durch Kombination der Verstellbarkeit von oberer und/oder unterer Körperanbindung mit der gelenkigen Verbindung der Stützen mit der unteren und/oder oberen Körperanbindung begünstigt werden.

Im Rahmen einer vorteilhaften Ausgestaltung kann der Auslegerabschnitt der ersten Stütze schwenkbar mit dem Rückenabschnitt der ersten Stütze verbunden sein und der Auslegerabschnitt der zweiten Stütze kann schwenkbar mit dem Rückenabschnitt der zweiten Stütze verbunden sein. Vorzugsweise ist der jeweilige Auslegerabschnitt um eine zu der Längsachse des Rückenabschnitts parallele erste, insbesondere vertikale, Auslegerschwenkachse schwenkbar an dem jeweiligen Rückenabschnitt angeordnet. Dies ermöglicht es, den Auslegerabschnitt bei angezogener Hilfsvorrichtung nach links oder rechts zu verschwenken, insbesondere ohne, dass der Rückenabschnitt mit verschwenkt werden muss. Alternativ oder zusätzlich kann der jeweilige Auslegerabschnitt um eine zu der Längsachse des Rückenabschnitts und zu einer Längsachse des Auslegerabschnitts orthogonale, insbesondere horizontale, zweite Auslegerschwenkachse schwenkbar an dem Rückenabschnitt angeordnet sein. Dies ermöglicht es, den Auslegerabschnitt "nach oben" oder "nach unten" zu verschwenken, insbesondere ohne, dass der Rückenabschnitt mit verschwenkt werden muss.

Die Erfindung wird im Folgenden anhand der Figuren näher erläutert. Es zeigen:
Fig. 1 vereinfachte schematische Darstellung einer Ausgestaltung einer Hilfsvorrichtung;
Fig. 2 vereinfachte schematische Darstellung zur Erläuterung eines Benutzungszustands der Hilfsvorrichtung;
Fig. 3 vereinfachte schematische Darstellung einer oberen Körperanbindung der Hilfsvorrichtung in einer Draufsicht;
Fig. 4 vereinfachte schematische Darstellung zur Erläuterung einer Körperanbindungseinrichtung der oberen Körperanbindung;
Fig. 5 vereinfachte schematische Darstellung einer Ausgestaltung der oberen Körperanbindung in einer Vordersicht;
Fig. 6 skizzierte Darstellung einer Ausgestaltung der oberen Körperanbindung in einer Hintersicht; und
Fig. 7 vereinfachte schematische Darstellung der Hilfsvorrichtung zur Erläuterung der Verstellbarkeit.

In der nachfolgenden Beschreibung sowie in den Figuren sind für identische oder einander entsprechende Merkmale jeweils dieselben Bezugszeichen verwendet.

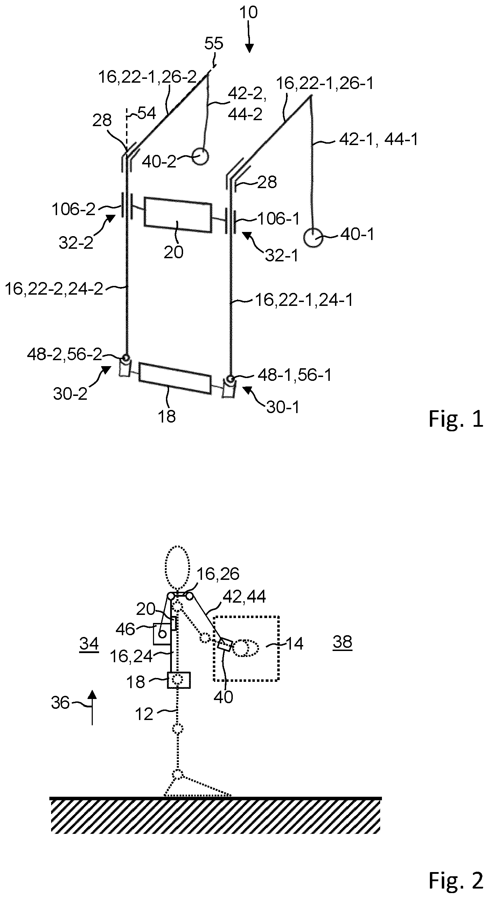

Die Figur 1 zeigt in vereinfachter schematischer Darstellung eine anziehbare Hilfsvorrichtung, welche insgesamt mit dem Bezugszeichen 10 bezeichnet ist. Die Hilfsvorrichtung 10 ist dazu ausgebildet, eine Bedienperson 12 beim Anheben und/oder Tragen einer Last 14 zu unterstützen (vgl. Fig. 2). Wie nachfolgend noch im Detail erläutert, ist die Hilfsvorrichtung 10 im Sinne einer mobilen Vorrichtung ausgebildet, welche von der Bedienperson 12 angezogen und transportiert werden kann.

Die Hilfsvorrichtung 10 umfasst eine Stützstruktur 16, welche dazu ausgebildet ist, eine Tragkraft, insbesondere die Gewichtskraft und/oder Trägheitskraft einer von der Bedienperson 12 gehaltenen Last 14, aufzunehmen und in bestimmte Körperbereiche der Bedienperson 12 abzuleiten. Zu diesem Zweck umfasst die Hilfsvorrichtung 10 außerdem eine untere Körperanbindung 18 zur Ankopplung der Stützstruktur 16 an einen Becken-, Hüft- und/oder Lendenbereich der Bedienperson 12. Die untere Körperanbindung 18 kann beispielsweise einen Hüftgurt (nicht dargestellt) aufweisen, welcher die Hüfte der Bedienperson 12 umfasst. Die Hilfsvorrichtung 10 umfasst zudem eine obere Körperanbindung 20 zur Ankopplung der Stützstruktur 16 an einen Oberkörper der Bedienperson 12 (nachfolgend noch im Detail erläutert).

Die Stützstruktur 16 umfasst eine erste (rechte) Stütze 22-1 und eine zweite (linke) Stütze 22-2. Wie aus Fig. 1 ersichtlich, umfassen die Stützen 22-1, 22-2 jeweils einen Rückenabschnitt 24-1, 24-2 und einen Auslegerabschnitt 26-1, 26-2. In dem dargestellten Beispiel sind die Rückenabschnitte 24-1, 24-2 mit den Auslegerabschnitten 26-1, 26-2 über nur schematisch angedeutete Stützenverbinder 28 miteinander verbunden. Es ist auch denkbar, dass die Rückenabschnitte 24-1, 24-2 mit den entsprechenden Auslegerabschnitten 26-1, 26-2 einstückig ausgebildet sind. Es ist auch denkbar, dass die Auslegerabschnitte 26-1, 26-2 über entsprechende Auslegergelenke (nicht dargestellt) schwenkbar mit den entsprechenden Rückenabschnitten 24-1, 24-2 verbunden sind. Beispielsweise kann das Auslegergelenk jeweils derart ausgebildet sein, dass der jeweilige Auslegerabschnitt 26-1, 26-2 um eine zu der Längsachse 54 des Rückenabschnitts 24-1, 24-2 parallele erste, insbesondere vertikale, Auslegerschwenkachse schwenkbar ist und/oder um eine zu der Längsachse 54 des Rückenabschnitts 24-1, 24-2 und zu einer Längsachse 55 des Auslegerabschnitts 26-1, 26-2 orthogonale, insbesondere horizontale, zweite Auslegerschwenkachse, schwenkbar ist.

Wie in Fig. 1 schematisch dargestellt, ist die erste Stütze 22-1 an einer ersten unteren Verbindungsstelle 30-1 mit der unteren Körperanbindung 18 verbunden und an einer ersten oberen Verbindungsstelle 32-1 mit der oberen Körperanbindung 20 verbunden. Die zweite Stütze 22-2 ist dementsprechend an einer zweiten unteren Verbindungsstelle 30-2 mit der unteren Körperanbindung 18 verbunden und an einer zweiten oberen Verbindungsstelle 32-2 mit der oberen Körperanbindung 20 verbunden (nachfolgend noch im Detail erläutert).

Wie aus Fig. 2 ersichtlich, ist die Hilfsvorrichtung 10 derart ausgebildet, dass dann, wenn die Hilfsvorrichtung 10 von der Bedienperson 12 angezogen ist, die Rückenabschnitte 24-1, 24-2 posterior, also an einer Rückseite 34 der Bedienperson 12, angeordnet sind und sich im Wesentlichen cranial (vgl. Pfeil 36 in Fig. 2) von der unteren Körperanbindung 18 entlang der Rückenpartie der Bedienperson 12 erstreckt (in Fig. 2 beispielhaft vertikal). Die Auslegerabschnitte 26-1, 26-2 sind derart ausgebildet, dass sie sich bei angezogener Hilfsvorrichtung 10 von posterior nach anterior, also von der Rückseite 34 zu einer Vorderseite 38 der Bedienperson 12 hin, erstrecken, insbesondere über eine Schulter der Bedienperson.

In dem dargestellten Beispiel sind die Rückenabschnitte 24-1, 24-2 und die Auslegerabschnitte 26-1, 26-2 orthogonal zueinander ausgebildet. Bei nicht dargestellten Ausgestaltungen sind jedoch auch andere Ausgestaltungen denkbar. Beispielsweise ist es denkbar, dass sich der jeweilige Auslegerabschnitt 26-1, 26-2 an den Rückenabschnitt 24-1, 24-2 anschließt und eine Krümmung derart aufweist, dass der Auslegerabschnitt 26-1, 26-2 bei angezogener Hilfsvorrichtung 10 sich von anterior nach posterior erstreckt.

Die Hilfsvorrichtung 10 umfasst außerdem eine erste Handanbindung 40-1 zur Anbindung an einen rechten Hand-oder Unterarmbereich der Bedienperson 12 und eine zweite Handanbindung 40-2 zur Anbindung an einen linken Hand-oder Unterarmbereich der Bedienperson 12. Wie in Fig. 1 schematisch dargestellt, ist die erste Handanbindung 40-1 mit dem Auslegerabschnitt 26-1 der ersten Stütze 22-1 über eine erste, insbesondere längenveränderbare, Verbindungseinrichtung 42-1 verbunden. Die zweite Handanbindung 40-2 ist mit dem Auslegerabschnitt 26-2 der zweiten Stütze 22-2 über eine zweite, insbesondere längenveränderbare, Verbindungseinrichtung 42-2 verbunden. Beispielhaft und bevorzugt kann es sich bei der Verbindungseinrichtung 42-1, 42-2 über um einen angetriebenen Seilzug 44-1, 44-2 handeln. Dann kann die Hilfsvorrichtung 10 außerdem eine gemeinsame oder für jeden Seilzug 44-1, 44-2 eigene Antriebseinrichtung 46 aufweisen, welche vorzugsweise an der Stützstruktur 16 gehaltert ist (vgl. Fig. 2). Die Hilfsvorrichtung 10 kann dann für jeden Seilzug 44-1, 44-2 eine, insbesondere in die Stützen 22 integrierte, Seilführung (nicht dargestellt) umfassen, welche dazu ausgebildet ist, das Seil von der Antriebseinrichtung 46 zu der Handanbindung 40-1, 40-2 zu führen. Insbesondere kann dann das Seil an einem freien Ende des Auslegerabschnitts 26-1, 26-2 über eine Seilumlenkeinrichtung (nicht dargestellt) austreten.

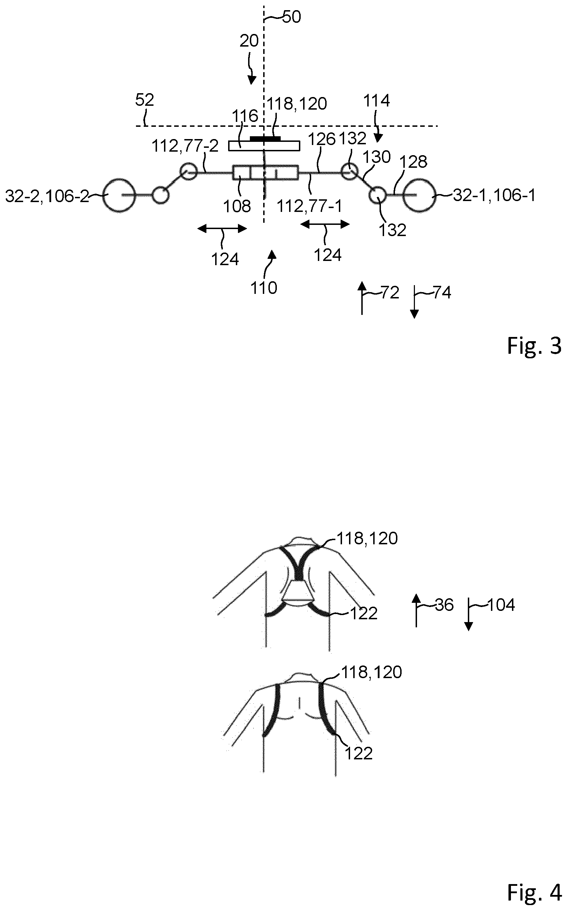

Die Figur 3 zeigt in vereinfachter schematischer Darstellung eine beispielhafte Ausgestaltung der oberen Körperanbindung 20 in einer Draufsicht. In dem dargestellten Beispiel umfasst die obere Körperanbindung 20 einen oberen Grundkörper 108, welcher zwischen den Rückenabschnitten 24-1, 24-2 angeordnet ist und mit diesen an den oberen Verbindungsstellen 32-1, 32-2 verbunden ist.

Der Grundkörper 108 ist Teil einer oberen Kraftverteilereinrichtung 110, welche dazu ausgebildet ist, Kräfte von den Stützen 22-1, 22-2 aufzunehmen und umzuleiten.

Die obere Körperanbindung 20 umfasst außerdem eine Krafteinleitungsplatte 116, welche ebenfalls Teil der oberen Kraftverteilereinrichtung 110 ist. Beispiel und bevorzugt ist die Krafteinleitungsplatte 116 derart verschiebbar an dem oberen Grundkörper 108 gehaltert, dass ein Abstand zwischen oberem Grundkörper 108 und Krafteinleitungsplatte 116 und somit ein Abstand zwischen oberem Grundkörper 108 und Rücken veränderbar, insbesondere einstellbar, ist.

Wie in Fig. 4 beispielhaft dargestellt, ist die Krafteinleitungsplatte 116 mit einem Gurtsystem 118 verbunden, über welches die Hilfsvorrichtung 10 mit einem Oberkörper der Bedienperson 12 verbunden werden kann. Das Gurtsystem 118 bildet insofern eine obere Körperanbindungseinrichtung 120. Beispielhaft und bevorzugt umfasst das Gurtsystem 118 mehrere Gurte 122, welche vorzugsweise aus Textil hergestellt sein können. Das Gurtsystem 118 ist beispielhaft derart ausgebildet, dass die Hilfsvorrichtung 10 rucksackartig anziehbar ist. Insbesondere kann die Krafteinleitungsplatte 116 derart verschiebbar mit dem Gurtsystem 118 verbunden sein, dass eine Position der Krafteinleitungsplatte 116 und somit eine Position der oberen Körperanbindung 20 cranial 36 bzw. caudal 104 veränderbar ist.

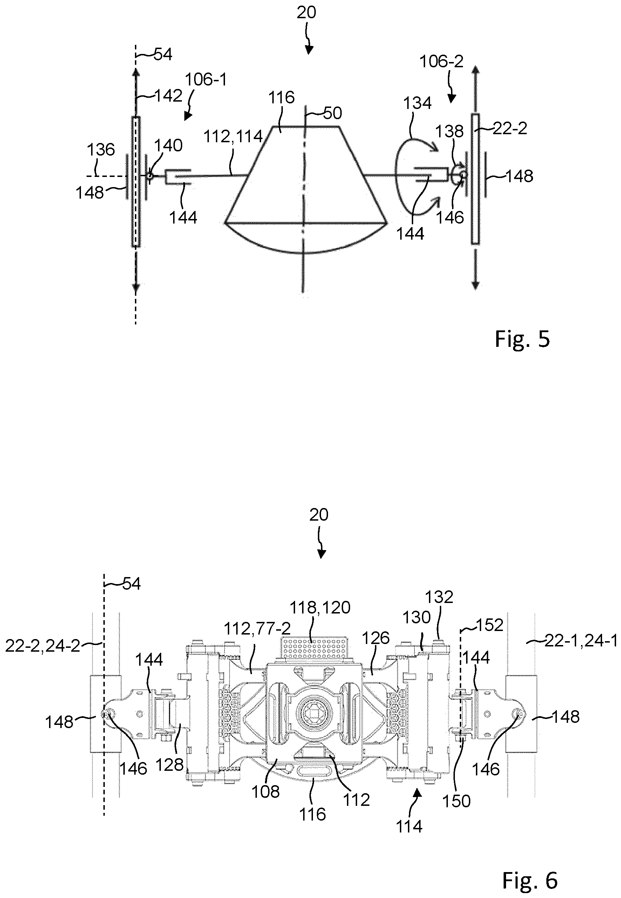

Die obere Körperanbindung umfasst einen ersten Verstellmechanismus 112, welcher dazu ausgebildet ist, eine Position von erster und zweiter oberer Verbindungsstelle 32-1, 32-2 lateral bzw. medial relativ zur Medianebene 50 zu verändern und somit einen Abstand von erster und zweiter oberer Verbindungsstelle 32-1, 32-2 zu dem Grundkörper 108 einzustellen (in Fig. 3 durch die Doppelpfeile 124 angedeutet). Auf diese Weise ist ein Abstand der Stützen 22-1, 22-2 voneinander einstellbar. Beispielhaft kann der erste obere Verstellmechanismus 112 eine linke und eine rechte Zahnstange 77-1, 77-2 umfassen, über welche die Stützen 22-1, 22-2 verschieblich an dem Grundkörper 108 gehaltert sind (vgl. auch Fig. 6).

Die obere Körperanbindung 20 umfasst außerdem einen zweiten oberen Verstellmechanismus 114, welcher dazu ausgebildet ist eine Position der oberen Verbindungsstellen 32-1, 32-2 nach anterior (vgl. Pfeil 72 in Fig. 3) bzw. posterior (vgl. Pfeil 74 in Fig. 3) relativ zur Frontalebene 52 verändern, insbesondere einzustellen. Eine beispielhafte Ausgestaltung des zweiten oberen Verstellmechanismus 114 ist in Fig. 3 nur schematisch angedeutet. Beispielhaft umfasst der zweite obere Verstellmechanismus 114 drei Segmente 126, 128, 130. Wie aus Fig. 3 ersichtlich, ist das erste Segment 126 mit dem oberen Grundkörper 108 verbunden, insbesondere über den ersten oberen Verstellmechanismus 112, 76. Das zweite Segment 128 ist mit der jeweiligen Stütze 22-1, 22-2 verbunden. Das dritte Segment 130 ist zwischen dem ersten und dem zweiten Segment 126, 128 angeordnet und sowohl mit dem ersten Segment 126, als auch mit dem zweiten Segment 128 über eine Schwenkverbindung 132 verbunden. Beispielhaft ist der zweite obere Verstellmechanismus 114 derart ausgebildet, dass das erste Segment 126 und das zweite Segment 128 stets zueinander parallel ausgerichtet sind.

Optional kann die erste Stütze 22-1 an der ersten oberen Verbindungsstelle 32-1 über eine erste obere Gelenkeinrichtung 106-1 mit der oberen Körperanbindung 20 verbunden sein und die zweite Stütze 22-2 kann an der zweiten oberen Verbindungsstelle 32-2 über eine zweite obere Gelenkeinrichtung 106-2 mit der oberen Körperanbindung 20 verbunden sein. Eine beispielhafte Ausgestaltung der oberen Gelenkeinrichtungen 106-1, 106-2 ist in Fig. 5 gezeigt, wobei die oberen Verstellmechanismen 112, 114 nur angedeutet sind. In dem dargestellten Beispiel weisen die oberen Gelenkeinrichtungen 106-1, 106-2 jeweils drei Gelenkfreiheitsgrade auf. Im Konkreten umfassen die oberen Gelenkeinrichtungen 106-1, 106-2 jeweils einen ersten Schwenkfreiheitsgrad (in Fig. 5 durch den Pfeil 134 angedeutet) um eine erste Schwenkachse 136. Die oberen Gelenkeinrichtungen 106-1, 106-2 umfassen außerdem jeweils einen zweiten Schwenkfreiheitsgrad (in Fig. 5 durch den Pfeil 138 angedeutet) um eine zu der ersten Schwenkachse 136 orthogonale zweite Schwenkachse 140. Darüber hinaus umfassen die oberen Gelenkeinrichtungen 106-1, 106-2 jeweils einen translatorischen Freiheitsgrad (in Fig. 5 durch den Doppelpfeil 142 angedeutet) entlang einer Längsachse 54 der Stütze 22-1, 22-2. Bei angezogener Hilfsvorrichtung 10 ist die erste Schwenkachse 136 insbesondere orthogonal zu der Medianebene 50 orientiert und die zweite Schwenkachse 140 ist orthogonal zu der Frontalebene 52 (vgl. Fig. 3, in Fig. 5 der Zeichenebene entsprechend) orientiert.

In dem dargestellten Beispiel ist der erste Schwenkfreiheitsgrad 134 durch ein erstes Schwenkgelenk 144 bereitgestellt, welches mit dem oberen Grundkörper 108 über den ersten und zweiten Verstellmechanismus 112, 114 verbunden ist (vgl. auch Fig. 6). Der zweite Schwenkfreiheitsgrad 138 ist durch ein zweites Schwenkgelenk 146 bereitgestellt, welches mit dem ersten Schwenkgelenk 144 verbunden ist. Der translatorische Freiheitsgrad ist durch eine Verschiebehülse 148 bereitgestellt, welche mit dem zweiten Schwenkgelenk 146 verbunden ist und in welcher die jeweilige Stütze 22-1, 22-2 entlang der Längsachse 54 verlagerbar aufgenommen ist. Vorzugsweise ist die Verschiebehülse 148 derart ausgebildet, dass die Stütze 22-1, 22-2 um ihre Längsachse 54 schwenkbar in der Verschiebehülse 148 aufgenommen ist. Vorzugsweise ist die obere Körperanbindung 20 symmetrisch in Bezug auf die Medianebene 50 ausgebildet.

Eine beispielhafte Ausgestaltung einer vorstehend beschriebenen oberen Körperanbindung 20 ist in Fig. 6 gezeigt, wobei für identische oder einander entsprechende Merkmale die gleichen Bezugszeichen verwendet sind. In dem dargestellten Beispiel umfassen die oberen Gelenkeinrichtungen (106-1, 106-2) jeweils zusätzlich ein optionales drittes Schwenkgelenk 150 um eine zu der ersten und zweiten Schwenkachse 136, 140 orthogonalen dritten Schwenkachse 152.

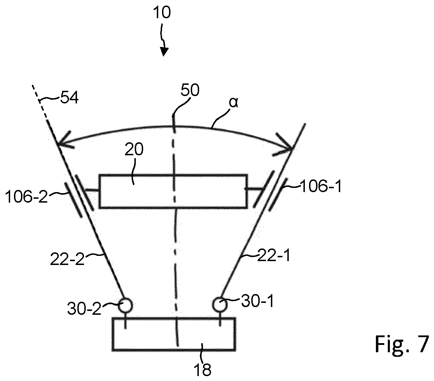

Wie in Fig. 1 angedeutet, kann die erste Stütze 22-1 auch an der ersten unteren Verbindungsstelle 30-1 optional über eine erste untere Gelenkeinrichtung 48-1 mit der unteren Körperanbindung 18 verbunden sein und die zweite Stütze 22-2 kann an der zweiten unteren Verbindungsstelle 30-2 optional über eine zweite untere Gelenkeinrichtung 48-2 mit der unteren Körperanbindung 18 verbunden sein. In dem dargestellten Beispiel sind die unteren Gelenkeinrichtungen 48-1, 48-2 als Kugelgelenke 56-1, 56-2 ausgebildet. Insofern ermöglichen es die unteren Gelenkeinrichtungen 48-1, 48-2 einen Neigungswinkel α der jeweiligen Stütze 22-1, 22-2 relativ zu der Medianebene 50 (vgl. Fig. 7) und ein Neigungswinkel der jeweiligen Stütze 22-1, 22-2 relativ zu der Frontalebene 52 zu verändern. Die untere Körperanbindung 18, kann zudem optional derart ausgebildet sein, dass ein Abstand der unteren Verbindungsstellen 30-1, 30-2 und/oder eine Position der unteren Verbindungsstellen 30-1, 30-2 bei angezogener Hilfsvorrichtung 10 in Richtung anterior und in Richtung posterior relativ zu der Frontalebene 52 einstellbar ist.

Eine vorteilhafte Wirkung der Hilfsvorrichtung 10 kann sich aus einer Kombination von gelenkiger Verbindung der Stützen 22-1, 22-2 mit der oberen Körperanbindung 20 und vorstehend beschriebener Verstellbarkeit der oberen Körperanbindung 20 ergeben. Wie in Fig. 7 schematisch dargestellt, kann durch Verändern eines Abstands der oberen Verbindungsstellen 32-1, 32-2 in Kombination mit den oberen Gelenkeinrichtungen 106-1, 106-2 einen Neigungswinkel α der Stützen 22-1, 22-2 relativ zu der Medianebene 50 eingestellt werden.

## Patentansprüche

1. Anziehbare Hilfsvorrichtung (10) zur Unterstützung beim Anheben und/oder Halten von Lasten (14) durch eine Bedienperson (12), umfassend
- eine Stützstruktur (16) mit einer ersten Stütze (22-1) und einer zweiten Stütze (22-2), wobei die erste Stütze (22-1) und die zweite Stütze (22-2) jeweils einen Rückenabschnitt (24-1, 24-2) und einen Auslegerabschnitt (26-1, 26-2) derart aufweisen, dass dann, wenn die Hilfsvorrichtung (10) von der Bedienperson (12) angezogen ist, der Rückenabschnitt (24-1, 24-2) posterior angeordnet ist und im Wesentlichen entlang der Rückenpartie der Bedienperson (12) verläuft und der Auslegerabschnitt (26-1, 26-2) sich von posterior nach anterior erstreckt;
- eine untere Körperanbindung (18) zur Ankopplung der Stützstruktur (16) an einen Becken-, Hüft- und/oder Lendenbereich der Bedienperson (12);
- eine obere Körperanbindung (20) zur Ankopplung der Stützstruktur (16) an einen Oberkörper der Bedienperson (12), insbesondere an einen Rücken-, Schulter-, und/oder Brustbereich;
- eine erste Handanbindung (40-1) zur Anbindung an einen rechten Hand- oder Unterarmbereich der Bedienperson (12), wobei die erste Handanbindung (40-1) mit der ersten Stütze (22-1) über eine erste längenveränderbare Verbindungseinrichtung (42-1) verbunden ist;
- eine zweite Handanbindung (40-2) zur Anbindung an einen linken Hand- oder Unterarmbereich der Bedienperson (12), wobei die zweite Handanbindung (40-2) mit der zweiten Stütze (22-2) über eine zweite längenveränderbare Verbindungseinrichtung (42-2) verbunden ist,
wobei die erste Stütze (22-1) an einer ersten oberen Verbindungsstelle (32-1) mit der oberen Körperanbindung (20) verbunden ist und wobei die zweite Stütze (22-2) an einer zweiten oberen Verbindungsstelle (32-2) mit der oberen Körperanbindung (20) verbunden ist, wobei die obere Körperanbindung (20) derart ausgebildet ist, dass eine Relativposition von erster oberer Verbindungsstelle (32-1) und zweiter oberer Verbindungsstelle (32-2) veränderbar ist.

2. Anziehbare Hilfsvorrichtung (10) nach Anspruch 1, wobei die obere Körperanbindung (20) derart ausgebildet ist, dass ein Abstand der ersten oberen Verbindungsstelle (32-1) und der zweiten oberen Verbindungsstelle (32-2) veränderbar, insbesondere einstellbar ist.

3. Anziehbare Hilfsvorrichtung (10) nach Anspruch 1 oder 2, wobei die obere Körperanbindung (20) derart ausgebildet ist, dass eine Position der ersten oberen Verbindungsstelle (32-1) und/oder der zweiten oberen Verbindungsstelle (32-2) bei angezogener Hilfsvorrichtung (10) lateral und medial relativ zur Medianebene (50) und/oder in Richtung anterior und in Richtung posterior relativ zur Frontalebene (52), insbesondere voneinander unabhängig, veränderbar, insbesondere einstellbar, ist.

4. Anziehbare Hilfsvorrichtung (10) nach einem der vorherigen Ansprüche, wobei der ersten und der zweiten Stütze (22-1, 22-2) jeweils ein erster oberer Verstellmechanismus (112) zugeordnet ist, welcher dazu ausgebildet ist, die obere Verbindungsstelle (32-1, 32-3) bei angezogener Hilfsvorrichtung (10) lateral und medial zu verlagern und/oder wobei der ersten und der zweiten Stütze (22-1, 22-2) jeweils ein zweiter oberer Verstellmechanismus (114) zugeordnet ist, welcher dazu ausgebildet ist, die obere Verbindungsstelle (32-1, 32-2) bei angezogener Hilfsvorrichtung (10) in Richtung anterior und in Richtung posterior zu verlagern.

5. Anziehbare Hilfsvorrichtung (10) nach einem der vorherigen Ansprüche, wobei eine Feststelleinrichtung zur Feststellung einer Relativposition von erster und zweiter oberer Verbindungsstelle (32-1, 32-2) vorgesehen ist, insbesondere zur Feststellung des ersten oberen Verstellmechanismus (112) und/oder des zweiten oberen Verstellmechanismus (114).

6. Anziehbare Hilfsvorrichtung (10) nach einem der vorherigen Ansprüche, wobei die erste Stütze (22-1) und die zweite Stütze (22-2) gelenkig mit der oberen Körperanbindung (20) verbunden sind, insbesondere wobei die erste Stütze (22-1) an der ersten oberen Verbindungsstelle (32-1) über eine erste obere Gelenkeinrichtung (106-1) mit der oberen Körperanbindung (20) verbunden ist und wobei die zweite Stütze (22-2) an der zweiten oberen Verbindungsstelle (32-2) über eine zweite obere Gelenkeinrichtung (106-2) mit der oberen Körperanbindung (20) verbunden ist, weiter insbesondere wobei die erste obere Gelenkeinrichtung (106-1) und die zweite obere Gelenkeinrichtung (106-2) jeweils mindestens zwei, vorzugsweise mindestens drei, Gelenkfreiheitsgrade aufweisen.

7. Anziehbare Hilfsvorrichtung (10) nach einem der vorherigen Ansprüche, wobei die obere Körperanbindung (20) eine obere Kraftverteilereinrichtung (110) umfasst, welche mit den Stützen (22-1, 22-2), insbesondere über die oberen Gelenkeinrichtungen (106-1, 106-2), verbunden ist, und wobei die obere Körperanbindung (20) eine mit der oberen Kraftverteilereinrichtung (110) verbundene flexible obere Körperanbindungseinrichtung (120) zur Anbindung an einen Körperbereich der Bedienperson (12) umfasst.

8. Anziehbare Hilfsvorrichtung (10) nach Anspruch 7, wobei die obere Körperanbindungseinrichtung (120) wenigstens ein Textilteil (122) umfasst, insbesondere in Form eines Gurtes, Gurtsystems (118) oder einer Manschette.

9. Anziehbare Hilfsvorrichtung (10) nach einem der Ansprüche 7 oder 8, wobei die obere Kraftverteilereinrichtung (110) einen Grundkörper (108) aufweist, welcher sich zwischen der ersten Stütze (22-1) und der zweiten Stütze (22-2) erstreckt und an welchem die Stützen (22-1, 22-2), insbesondere über die oberen Gelenkeinrichtungen (106-1, 106-2), angeordnet sind

10. Anziehbare Hilfsvorrichtung (10) nach einem der Ansprüche 7 bis 9, wobei die obere Kraftverteilereinrichtung (110) eine Krafteinleitungsplatte (116) aufweist, welche mit der oberen Körperanbindungseinrichtung (120) einerseits und mit dem oberen Grundkörper (108) andererseits derart verbunden ist, dass ein Abstand der Krafteinleitungsplatte (116) zu dem oberen Grundkörper (108) und/oder eine Position der Krafteinleitungsplatte (116) cranial und caudal veränderbar, insbesondere einstellbar, ist.

11. Anziehbare Hilfsvorrichtung (10) nach einem der Ansprüche 9 oder 10 bei Rückbezug auf Anspruch 4, wobei der zweite obere Verstellmechanismus (114) drei zueinander verstellbare Segmente (126, 128, 130) umfasst, wobei ein erstes Segment (126) mit dem oberen Grundkörper (108) verbunden ist, wobei ein zweites Segment (128) mit der Stütze (22-1, 22-2), insbesondere über die obere Gelenkeinrichtung (106-1, 106-2), verbunden ist, wobei ein drittes Segment (130) zwischen dem ersten Segment (126) und dem zweiten Segment (128) angeordnet ist und schwenkbeweglich mit dem ersten Segment (126) und schwenkbeweglich mit dem zweiten Segment (128) verbunden ist, insbesondere derart, dass das erste Segment (126) und das zweite Segment (128) zueinander parallel ausgerichtet sind.

12. Anziehbare Hilfsvorrichtung (10) nach einem der vorherigen Ansprüche, wobei die erste Stütze (22-1) an einer ersten unteren Verbindungsstelle (30-1), insbesondere gelenkig, weiter insbesondere über eine erste untere Gelenkeinrichtung (48-1), mit der unteren Körperanbindung (18) verbunden ist und wobei die zweite Stützte (22-2) an einer zweiten unteren Verbindungsstelle (30-2), insbesondere gelenkig, weiter insbesondere über eine zweite untere Gelenkeinrichtung (48-1), mit der unteren Körperanbindung (18) verbunden ist.

13. Anziehbare Hilfsvorrichtung (10) nach Anspruch 12, wobei die erste untere Gelenkeinrichtung (48-1) und die zweite untere Gelenkeinrichtung (48-2) jeweils derart ausgebildet sind, dass bei angezogener Hilfsvorrichtung (10) ein Neigungswinkel (α) der Stütze (22-1, 22-2) relativ zu der Medianebene (50) und/oder ein Neigungswinkel (β) der Stütze (22-1, 22-2) relativ zu der Frontalebene (52), insbesondere voneinander unabhängig, veränderbar, insbesondere einstellbar, sind.

14. Anziehbare Hilfsvorrichtung (10) nach einem der Ansprüche 12 oder 13, wobei die untere Körperanbindung (18) derart ausgebildet ist, dass eine Relativposition von erster unterer Verbindungsstelle (30-1) und zweiter unterer Verbindungsstelle (30-2) veränderbar ist, insbesondere eine Position der ersten unteren Verbindungsstelle (30-1) und/oder der zweiten unteren Verbindungsstelle (30-2) bei angezogener Hilfsvorrichtung (10) lateral oder medial relativ zur Medianebene (50) und/oder in Richtung anterior oder in Richtung posterior relativ zur Frontalebene (52), insbesondere voneinander unabhängig, veränderbar, weiter insbesondere einstellbar, ist.

15. Anziehbare Hilfsvorrichtung nach einem der Ansprüche 12 bis 14, wobei die obere und die untere Körperanbindung (18, 20) derart ausgebildet sind, dass eine Relativposition der oberen Verbindungsstellen (32-1, 32-2) und eine Relativposition der unteren Verbindungsstellen (30-1, 30-2) voneinander unabhängig veränderbar, insbesondere einstellbar, sind.

## Claims

1. Wearable aid (10) for assisting in lifting and/or holding of loads (14) by an operator (12), comprising
- a support structure (16) having a first support (22-1) and a second support (22-2), wherein the first support (22-1) and the second support (22-2) each have a back portion (24-1, 24-2) and an extension arm portion (26-1, 26-2) such that, when the aid (10) is worn by the operator (12), the back portion (24-1, 24-2) is arranged posteriorly and extends substantially along the back of the operator (12) and the extension arm portion (26-1, 26-2) extends from posterior to anterior;
- a lower body attachment (18) for coupling the support structure (16) to a pelvic, hip and/or lumbar region of the operator (12);
- an upper body attachment (20) for coupling the support structure (16) to an upper body of the operator (12), in particular to a back, shoulder and/or chest region;
- a first hand attachment (40-1) for attachment to a right hand region or forearm region of the operator (12), wherein the first hand attachment (40-1) is connected to the first support (22-1) via a first length-adjustable connecting device (42-1);
- a second hand attachment (40-2) for attachment to a left hand region or forearm region of the operator (12), wherein the second hand attachment (40-2) is connected to the second support (22-2) via a second length-adjustable connecting device (42-2),
wherein the first support (22-1) is connected to the upper body attachment (20) at a first upper connecting point (32-1) and wherein the second support (22-2) is connected to the upper body attachment (20) at a second upper connecting point (32-2), wherein the upper body attachment (20) is designed such that a relative position of the first upper connecting point (32-1) and the second upper connecting point (32-2) can be changed.

2. Wearable aid (10) according to claim 1, wherein the upper body attachment (20) is designed such that a distance between the first upper connecting point (32-1) and the second upper connecting point (32-2) can be changed, in particular adjusted.

3. Wearable aid (10) according to claim 1 or claim 2, wherein the upper body attachment (20) is designed such that a position of the first upper connecting point (32-1) and/or the second upper connecting point (32-2) can be changed, in particular adjusted, in particular independently of one another, laterally and medially relative to the median plane (50) and/or in the anterior direction and in the posterior direction relative to the frontal plane (52), when the aid (10) is worn.

4. Wearable aid (10) according to any of the preceding claims, wherein the first and the second support (22-1, 22-2) are each associated with a first upper adjustment mechanism (112) which is designed to displace the upper connecting point (32-1, 32-3) laterally and medially when the aid (10) is worn and/or
wherein the first and the second support (22-1, 22-2) are each associated with a second upper adjustment mechanism (114) which is designed to displace the upper connecting point (32-1, 32-2) in the anterior direction and in the posterior direction when the aid (10) is worn.

5. Wearable aid (10) according to any of the preceding claims, wherein a securing device is provided for securing a relative position of the first and second upper connecting point (32-1, 32-2), in particular for securing the first upper adjustment mechanism (112) and/or the second upper adjustment mechanism (114).

6. Wearable aid (10) according to any of the preceding claims, wherein the first support (22-1) and the second support (22-2) are connected in an articulated manner to the upper body attachment (20), in particular wherein the first support (22-1) is connected to the upper body attachment (20) at the first upper connecting point (32-1) via a first upper joint device (106-1) and wherein the second support (22-2) is connected to the upper body attachment (20) at the second upper connecting point (32-2) via a second upper joint device (106-2), more particularly wherein the first upper joint device (106-1) and the second upper joint device (106-2) each have at least two, preferably at least three, degrees of joint freedom.

7. Wearable aid (10) according to any of the preceding claims, wherein the upper body attachment (20) comprises an upper force distribution device (110) which is connected to the supports (22-1, 22-2), in particular via the upper joint devices (106-1, 106-2), and wherein the upper body attachment (20) comprises a flexible upper body attachment device (120), which is connected to the upper force distribution device (110), for attachment to a body region of the operator (12).

8. Wearable aid (10) according to claim 7, wherein the upper body attachment device (120) comprises at least one textile part (122), in particular in the form of a belt, belt system (118) or a cuff.

9. Wearable aid (10) according to one of claims 7 or 8, wherein the upper force distribution device (110) comprises a main body (108) which extends between the first support (22-1) and the second support (22-2) and on which the supports (22-1, 22-2) are arranged, in particular via the upper joint devices (106-1, 106-2).

10. Wearable aid (10) according to any of claims 7 to 9, wherein the upper force distribution device (110) has a force introduction plate (116) which is connected to the upper body attachment device (120) on one side and to the upper main body (108) on the other side in such a way that a distance of the force introduction plate (116) from the upper main body (108) and/or a position of the force introduction plate (116) cranially and caudally can be changed, in particular adjusted.

11. Wearable aid (10) according to one of claims 9 or 10 when dependent on claim 4, wherein the second upper adjustment mechanism (114) comprises three mutually adjustable segments (126, 128, 130), wherein a first segment (126) is connected to the upper main body (108),
wherein a second segment (128) is connected to the support (22-1, 22-2), in particular via the upper joint device (106-1, 106-2),
wherein a third segment (130) is arranged between the first segment (126) and the second segment (128) and is pivotably connected to the first segment (126) and pivotably connected to the second segment (128), in particular in such a way that the first segment (126) and the second segment (128) are aligned parallel to one another.

12. Wearable aid (10) according to any of the preceding claims, wherein the first support (22-1) is connected to the lower body attachment (18) at a first lower connecting point (30-1), in particular in an articulated manner, more particularly via a first lower joint device (48-1), and wherein the second support (22-2) is connected to the lower body attachment (18) at a second lower connecting point (30-2), in particular in an articulated manner, more particularly via a second lower joint device (48-1).

13. Wearable aid (10) according to claim 12, wherein the first lower joint device (48-1) and the second lower joint device (48-2) are each designed such that, when the aid (10) is worn, an angle of inclination (α) of the support (22-1, 22-2) relative to the median plane (50) and/or an angle of inclination (β) of the support (22-1, 22-2) relative to the frontal plane (52) can be changed, in particular adjusted, in particular independently of one another.

14. Wearable aid (10) according to one of claims 12 or 13, wherein the lower body attachment (18) is designed such that a relative position of the first lower connecting point (30-1) and the second lower connecting point (30-2) can be changed, in particular a position of the first lower connecting point (30-1) and/or the second lower connecting point (30-2) can be changed, more particularly adjusted, in particular independently of one another, laterally or medially relative to the median plane (50) and/or in the anterior direction or in the posterior direction relative to the frontal plane (52), when the aid (10) is worn.

15. Wearable aid according to any of claims 12 to 14, wherein the upper and the lower body attachment (18, 20) are designed such that a relative position of the upper connecting points (32-1, 32-2) and a relative position of the lower connecting points (30-1, 30-2) can be changed, in particular adjusted, independently of one another.

## Revendications

1. Dispositif auxiliaire (10) pouvant être enfilé pour aider un opérateur (12) à soulever et/ou à maintenir des charges (14), comprenant
- une structure de support (16) avec un premier support (22-1) et un deuxième support (22-2), dans lequel le premier support (22-1) et le deuxième support (22-2) présentent chacun une partie dorsale (24-1, 24-2) et une partie en porte-à-faux (26-1, 26-2) de telle sorte que, lorsque le dispositif auxiliaire (10) est enfilé par l'opérateur (12), la partie dorsale (24-1, 24-2) est disposée postérieurement et s'étend sensiblement le long de la partie dorsale de l'opérateur (12) et la partie en porte-à-faux (26-1, 26-2) s'étend de la partie postérieure vers la partie antérieure ;
- une attache corporelle inférieure (18) pour coupler la structure de support (16) à une zone de bassin, de hanche et/ou de lombaire de l'opérateur (12) ;
- une attache corporelle supérieure (20) pour coupler la structure de support (16) à un haut du corps de l'opérateur (12), en particulier à une zone de dos, d'épaule et/ou de poitrine ;
- une première attache de main (40-1) destinée à être attachée à une région de main ou d'avant-bras droit(e) de l'opérateur (12), dans lequel la première attache de main (40-1) est reliée au premier support (22-1) par l'intermédiaire d'un premier équipement de liaison (42-1) de longueur variable ;
- une deuxième attache de main (40-2) destinée à être attachée à une zone de main ou d'avant-bras gauche de l'opérateur (12), dans lequel la deuxième attache de main (40-2) est reliée au deuxième support (22-2) par l'intermédiaire d'un deuxième équipement de liaison (42-2) de longueur variable,
dans lequel le premier support (22-1) est relié à l'attache corporelle supérieure (20) au niveau d'un premier point de liaison supérieur (32-1) et dans lequel le deuxième support (22-2) est relié à l'attache corporelle supérieure (20) au niveau d'un deuxième point de liaison supérieur (32-2), dans lequel l'attache corporelle supérieure (20) est réalisée de telle sorte qu'une position relative du premier point de liaison supérieur (32-1) et du deuxième point de liaison supérieur (32-2) peut être modifiée.

2. Dispositif auxiliaire (10) pouvant être enfilé selon la revendication 1, dans lequel l'attache corporelle supérieure (20) est réalisée de telle sorte qu'une distance entre le premier point de liaison supérieur (32-1) et le deuxième point de liaison supérieur (32-2) peut être modifiée, en particulier peut être réglée.

3. Dispositif auxiliaire (10) pouvant être enfilé selon la revendication 1 ou 2, dans lequel l'attache corporelle supérieure (20) est réalisée de telle sorte qu'une position du premier point de liaison supérieur (32-1) et/ou du deuxième point de liaison supérieur (32-2), lorsque le dispositif auxiliaire (10) est enfilé, peut être modifié, en particulier réglé, latéralement et médialement par rapport au plan médian (50) et/ou dans la direction antérieure et dans la direction postérieure par rapport au plan frontal (52), en particulier indépendamment l'une de l'autre.

4. Dispositif auxiliaire(10) pouvant être enfilé selon l'une quelconque des revendications précédentes, dans lequel respectivement un premier mécanisme de déplacement supérieur (112), lequel est réalisé pour décaler le point de liaison supérieur (32-1, 32-3) latéralement et médialement lorsque le dispositif auxiliaire (10) est serré, est associé au premier et au deuxième support (22-1, 22-2) et/ou dans lequel respectivement un deuxième mécanisme de déplacement supérieur (114), lequel est réalisé pour décaler le point de liaison supérieur (32-1, 32-2) dans la direction antérieure et dans la direction postérieure lorsque le dispositif auxiliaire (10) est enfilé, est associé au premier et au deuxième support (22-1, 22-2).

5. Dispositif auxiliaire (10) pouvant être enfilé selon l'une quelconque des revendications précédentes, dans lequel un équipement de blocage est prévu pour bloquer une position relative des premier et deuxième points de liaison supérieurs (32-1, 32-2), en particulier pour bloquer le premier mécanisme de déplacement supérieur (112) et/ou le deuxième mécanisme de déplacement supérieur (114).

6. Dispositif auxiliaire (10) pouvant être enfilé selon l'une quelconque des revendications précédentes, dans lequel le premier support (22-1) et le deuxième support (22-2) sont reliés de manière articulée à l'attache corporelle supérieure (20), en particulier dans lequel le premier support (22-1) est relié à l'attache corporelle supérieure (20) au niveau du premier point de liaison supérieur (32-1) par l'intermédiaire d'un premier équipement d'articulation supérieur (106-1) et dans lequel le deuxième support (22-2) est relié à l'attache corporelle supérieure (20) au niveau du deuxième point de liaison supérieur (32-2) par l'intermédiaire d'un deuxième équipement d'articulation supérieur (106-2), plus particulièrement dans lequel le premier équipement d'articulation supérieur (106-1) et le deuxième équipement d'articulation supérieur (106-2) présentent respectivement au moins deux, de préférence au moins trois, degrés de liberté d'articulation.

7. Dispositif auxiliaire (10) pouvant être enfilé selon l'une quelconque des revendications précédentes, dans lequel l'attache corporelle supérieure (20) comprend un équipement de répartition de force supérieur (110), lequel est relié aux supports (22-1, 22-2), en particulier par l'intermédiaire des équipements d'articulation supérieurs (106-1, 106-2), et dans lequel l'attache corporelle supérieure (20) comprend un équipement d'attache corporelle supérieure (120) flexible relié à l'équipement de répartition de force supérieur (110) pour l'attache à une zone du haut du corps de l'opérateur (12) .

8. Dispositif auxiliaire (10) pouvant être enfilé selon la revendication 7, dans lequel l'équipement d'attache corporelle supérieure (120) comprend au moins une pièce textile (122), en particulier sous la forme d'une ceinture, d'un système de ceinture (118) ou d'un manchon.

9. Dispositif auxiliaire (10) pouvant être enfilé selon l'une quelconque des revendications 7 ou 8, dans lequel l'équipement de répartition de force supérieur (110) présente un corps de base (108), lequel s'étend entre le premier support (22-1) et le deuxième support (22-2) et sur lequel sont disposés les supports (22-1, 22-2), en particulier par l'intermédiaire des équipements d'articulation supérieurs (106-1, 106-2).

10. Dispositif auxiliaire (10) pouvant être enfilé selon l'une quelconque des revendications 7 à 9, dans lequel l'équipement de répartition de force supérieur (110) présente une plaque d'introduction de force (116), laquelle est reliée à l'équipement d'attache corporelle supérieure (120) d'une part et au corps de base supérieur (108) d'autre part, de telle sorte qu'une distance de la plaque d'introduction de force (116) par rapport au corps de base supérieur (108) et/ou une position de la plaque d'introduction de force (116) peut être modifiée, en particulier réglée, dans le sens cranial et caudal.

11. Dispositif auxiliaire (10) pouvant être enfilé selon l'une quelconque des revendications 9 ou 10 lors d'un rattachement à la revendication 4, dans lequel le deuxième mécanisme de déplacement supérieur (114) comprend trois segments (126, 128, 130) déplaçables les uns par rapport aux autres, dans lequel un premier segment (126) est relié au corps de base supérieur (108), dans lequel un deuxième segment (128) est relié au support (22-1, 22-2), en particulier par le biais du dispositif d'articulation supérieur (106-1,106-2), dans lequel un troisième segment (130) est disposé entre le premier segment (126) et le deuxième segment (128) et est relié de manière pivotante au premier segment (126) et de manière pivotante au deuxième segment (128), en particulier de telle sorte que le premier segment (126) et le deuxième segment (128) sont orientés parallèlement l'un à l'autre.

12. Dispositif auxiliaire (10) pouvant être enfilé selon l'une quelconque des revendications précédentes, dans lequel le premier support (22-1) est relié à l'attache corporelle inférieure (18) au niveau d'un premier point de liaison inférieur (30-1), en particulier de manière articulée, plus particulièrement par l'intermédiaire d'un premier équipement d'articulation inférieur (48-1), et dans lequel le deuxième support (22-2) est relié à l'attache corporelle inférieure (18) au niveau d'un deuxième point de liaison inférieur (30-2), en particulier de manière articulée, plus particulièrement par l'intermédiaire d'un deuxième équipement d'articulation inférieur (48-1).

13. Dispositif auxiliaire (10) pouvant être enfilé selon la revendication 12, dans lequel le premier équipement d'articulation inférieur (48-1) et le deuxième équipement d'articulation inférieur (48-2) sont respectivement réalisés de telle sorte que, lorsque le dispositif auxiliaire (10) est enfilé, un angle d'inclinaison (α) du support (22-1, 22-2) par rapport au plan médian (50) et/ou un angle d'inclinaison (β) du support (22-1, 22-2) par rapport au plan frontal (52) peuvent être modifiés, en particulier réglés, en particulier indépendamment l'un de l'autre.

14. Dispositif auxiliaire (10) pouvant être enfilé selon l'une quelconque des revendications 12 à 13, dans lequel l'attache corporelle inférieure (18) est réalisée de telle sorte qu'une position relative du premier point de liaison inférieur (30-1) et du deuxième point de liaison inférieur (30-2) peut être modifiée, en particulier une position du premier point de liaison inférieur (30-1) et/ou du deuxième point de liaison inférieur (30-2), lorsque le dispositif auxiliaire (10) est enfilé, peut être modifiée, en particulier réglée, latéralement ou médialement par rapport au plan médian (50) et/ou dans la direction antérieure ou dans la direction postérieure par rapport au plan frontal (52), en particulier indépendamment l'une de l'autre.

15. Dispositif auxiliaire pouvant être enfilé selon l'une quelconque des revendications 12 à 14, dans lequel les attaches corporelles supérieure et inférieure (18, 20) sont réalisées de telle sorte qu'une position relative des points de liaison supérieurs (32-1, 32-2) et une position relative des points de liaison inférieurs (30-1, 30-2) peut être modifiée, en particulier réglée, indépendamment l'une de l'autre.
